# EUROPEAN PATENT SPECIFICATION

(11) **EP 0 550 991 B1**
(45) Date of publication and mention of the grant of the patent: **21.02.1996**
(21) Application number: 92311568.7
(22) Date of filing: 17.12.1992
(51) Int. Cl.: B23Q 11/10

(54) **Metalworking fluid management system**
Managementsystem für Metallbearbeitungsflüssigkeit
Système de gestion de fluide pour usinage des métaux

(30) Priority: 06.01.1992 US 817245
(43) Date of publication of application: 14.07.1993
(73) Proprietor: W.R. Grace & Co.-Conn., New York, New York 10036 (US)
(72) Inventor: Tuck, Ira Thomas, Jr., Mocksville, N.C. 27028 (US)
(74) Representative: Barlow, Roy James

(56) References cited:
- WO-A-90/14624
- US-A- 2 999 597
- US-A- 3 518 917

## Description

The present invention relates to a metalworking fluid management system and to a process for using the system. More particularly, it relates to a management system and process for recycling and reconstituting metalworking fluids.

### BACKGROUND OF THE INVENTION

In most metalworking processes, the use of a metalworking fluid is necessary in order to achieve the desired result such as lubrication, cooling, fines removal, etc.

The system and process for using the system as disclosed in the present invention is useful for a variety of metalworking operations. For example, it is particularly useful in the manufacture of metal cans, in particular two piece cans formed by the draw and ironing process. Additionally, it is useful for the roll forming process for the manufacture of metal sheet stock. Likewise, it is useful in other metalworking processes such as grinding, milling or broaching, and in stamping, cutting, bending or boring, of sheets such as aluminium sheets. It is also useful in cleaning applications such as acid or alkaline cleaning systems.

Typically, the processes include the recirculation of spent fluid from the metalworking process through a filtration and equilibration system to remove metal fines, tramp oil, soils, etc. and return the fluid to the metalworking process.

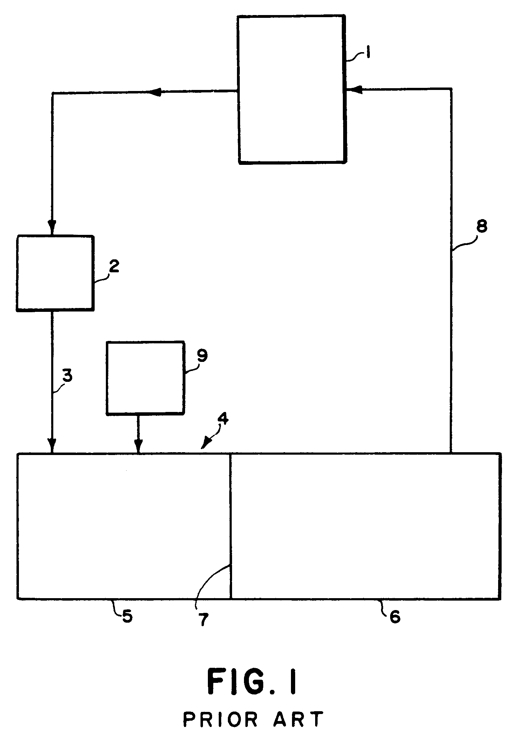

One such system is shown in Figure 1, in which the metalworking station 1 is connected to a sump 2 which collects the spent metalworking fluid. From the sump, the fluid is pumped via a conduit 3 to a filtration system 4. The filtration system 4 is comprised of a dirty side 5 and a clean side 6. The coolant is pumped from the dirty side 5 through a filter 7 such as a pleated paper filter, to the clean side 6. The coolant is then pumped via a second conduit 8, to the metalworking process, such as a can making machine.

The fluid concentration is maintained by either adding a premixed supply of fluid or by bulk feeding concentrate of the fluid to the filtration system, generally on the dirty side. Such a supply is shown as 9 in Figure 1.

This system requires the use of an excessive concentration of fluid in the filtration system. Additionally, the need to maintain high concentrations of the fluid due to losses in the filtration system causes the emulsification of greater amounts of tramp oil and the retention of soils and fines that leads to the premature clogging and replacement of the filter media or cleaning of the filtration system. Moreover, in can making and other manufacture of metal parts, the higher concentration of fluid causes the fluid, soils and tramp oil to be retained on the finished metal part and the associated tooling which then requires increased cleaning. Lastly, the higher concentration of fluid increases the emulsification level which makes disposal to waste more difficult.

WO-A90/14624 discloses a metalworking fluid central system in which the make-up flow of fresh constituents is introduced into the top of a clean fluid region of a combined reservoir-and-filter assembly. Metalworking fluid from that clean fluid area is recycled through several machine tools and is returned to a dirty fluid area from which swarf and chips can be removed before the used fluid is passed through a filter and into the clean fluid area.

US-A-3518917 discloses a metalworking fluid central system in which the make-up flow enters the system between a solid separation or filtering system and a reservoir from which ultimately the metalworking fluid is drawn for recycling through a set of machine tools.

In these two last mentioned documents, the flow enters a holding region before being drawn off for re-use.

### SUMMARY AND OBJECTS OF THE INVENTION

The present invention relates to a system and a process for recirculating a metalworking fluid, such as a coolant or lubricant. The system is formed of a metalworking station, a filtration system and a means for supplying neat concentrations of metalworking fluid to the circulating fluid.

The system of the present invention is defined in claim 1.

The process of the invention is defined in claim 9.

The supply means includes one or more speed-variable, volume-variable, or time-variable pumps which draw fluid concentrates, additives and/or water into the system in the desired amounts.

WO-A-90/14624 has been used as the basis for the pre-characterising portions of claims 1 and 9.

### IN THE DRAWINGS

Figure 1 shows a metalworking fluid recirculation system as is known in the prior art.

Figure 2 shows a metalworking fluid system according to the present invention.

### DETAILED DESCRIPTION OF THE INVENTION

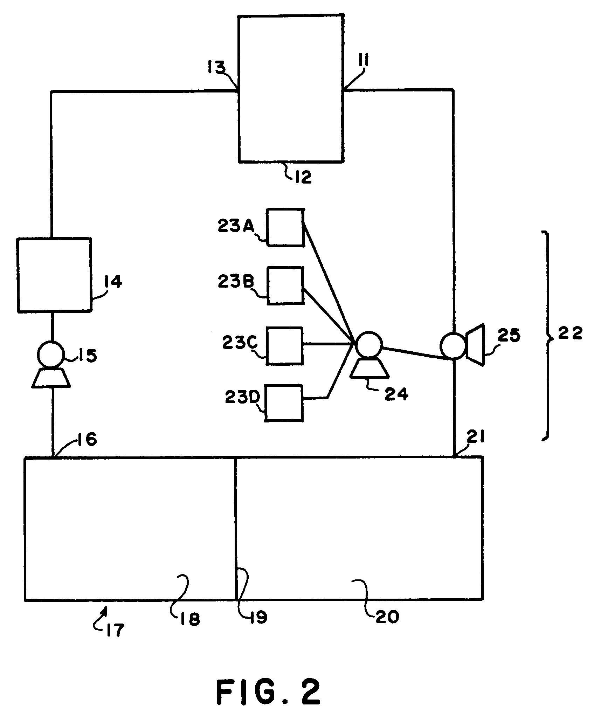

In Figure 2 is a metalworking system according to one embodiment of the present invention. A supply of metalworking fluid is fed into an inlet means 11 of a metalworking station 12. After use in the metalworking station, the fluid exits via an outlet means 13 from the metalworking station 12. Optionally and preferably, the spent fluid is discharged into a collection means such as a sump 14 and then moved by a pumping means 15 to an inlet means 16 of a filtration area 17. The filtration area has a collection area 18 where dirty (unfiltered) fluid is kept and passed through a filtration means 19 to a retention area 20. From outlet means 21 of the filtration area located in the retention area 20, the fluid is returned to the inlet means 11 of metalworking station 12 for reuse.

All components interconnecting the system may either be directed linked together or through a series of pipes or conduits between the adjacent components.

A means for adding metalworking fluid components is shown at 22. It comprises one or more supplies 23 of metalworking fluid components, such as oils, lubricants, coolants, water, biocides, corrosion inhibitors, pH adjusters, etc. which may be stored separately or combined in various combinations. A variable pumping means 24 connects the supply (23A-D) to the system somewhere between the outlet 21 of the filtration area 17 and the inlet means 11 of the metalworking station 12. Preferably, the means 22 for adding components is connected to the inlet of a system pump 25 which supplies the fluid from the filtration area 17 to the metalworking station 12, thereby ensuring adequate mixing of the components with the filtered fluid before entering the metalworking station 12.

While not shown in Figure 2, there may be an optional and preferred filtration pumping means which draws the fluid from the collection area 18 through the filtration means 19 to the retention area 20.

All of the individual components are well-known to one skilled in the art and are commercially available.

The following is a description of the major components of the system as described in the present invention.

An important component of the present invention is the pump 24 which supplies the necessary or desired fluid constituents to the system. The selected pump may be variable in speed, in volume and/or in time, depending upon the desired fluid constituent metered through the pump.

Preferably, the pump is speed-variable and/or volume-variable so that the amount of fluid constituents is added to the system at a desired rate. By being variable, the system operator can simply change the rate as dictated by the parameters of the fluid in the system e.g. if the fluid concentration drops, the pump may be increased to raise the concentration to the desired level. Once obtained, the pump may be slowed to maintain that level.

Such pumps are well-known in the chemical industry. Two preferred pumps are available from First Coast Products, in Jacksonville, Florida and are known by Model Numbers PP-15-SC-01 or PP-80-SC-01. These pumps are variable speed, self-priming, peristaltic pumps used for metering a variety of chemicals. They may also contain an adjustable programmer that allows one to turn the pump on and off in selected time increments. The pumps are speed adjustable so that the feed rate may be varied as desired.

Where it is desired to add different constituents to the fluid at different rates, it is preferred to use a series of pumps, one for each constituent so as to ensure simple and automatic metering of the desired constituent as required by the system. For example, in a metalworking fluid, one may have a first pump for adding neat concentrations of the fluid (i.e. the fluid has not been mixed with water or a solvent diluent). A second pump may be used to supply a biocide and a third pump may be used to supply a second biocide and/or additional additives such as extreme pressure agents, pH-adjusters, water etc. Different pumps are preferred due to the different application rates of the constituents.

Alternatively, one pump or two pumps could be used, the pump or pumps being connected to the supplies of the different constituents via a series of valves controllable so that the correct constituents are metered through the pump or pumps at the correct time and in the desired amounts.

The filtration means 19 is any filtration device which is commonly used in the metalworking industry for the cleaning and recycling of metalworking fluids.

A typical filtering system used in metalworking is a large tank which is divided into two separate portions. One portion 18 receives the used metalworking fluid which is dirty with metal fines, soils, tramp oils, etc. The other portion 20 retains the filtered metalworking fluid and feeds it back to the system for reuse. Between the two areas 18 and 20 (dirty and clean) is the filtration means 19. It may be part of the tank, such as forming a physical division between the two portions. Alternatively, it may be formed as part of one of the two portions, preferably the dirty or collection portion 18. In either instance, the fluid is drawn through the filter and into the retention area 20.

Commonly, the filtration means is a fibrous sheet material, such as paper (cellulosic, glass or synthetic) or fabric (glass or synthetic) or a mat or felt (glass, cellulosic or synthetic). More preferably, it is a pleated paper type of filter as it is low cost, easy to replace and maintain and provides adequate filtration performance. Such filters are well-known and commonly available in the industry. Other filters may be used, as the type of filter, per se, is not critical to the invention. Other well-known filtration means include metal screens or baskets, centrifuges, coagulation and/or settling tanks, absorbent mops, etc. All of these filtration means are well-known to one skilled in the art and are useful in the present system.

Any other pumps used in the system may be of the same type as those 24 used in the means for adding fluid constituents to the system. Alternatively, other pumps such as diaphragm pumps, which are commonly or traditionally used in fluid circulation systems, may be used.

The tank used for collecting, filtering and retaining the metalworking fluid may be any such tank commonly used in the industry. Typically, such tanks may be formed of metal, such as aluminum, stainless steel or galvanized aluminum, or plastic or fiberglass. They should be of sufficient volume to allow for adequate filtration and retention of an adequate volume of fluid for use in the system.

Additionally, such tanks often contain sensors for measuring fluid levels in order to ensure that sufficient fluid is maintained in the system.

Moreover, various other well-known components typically used in such systems are also useful in the present invention. Such components may include heaters, pressure gauges, water supply junctions, pressure dampers, check valves, etc.

All or some of the components of the system may be directly connected to the adjacent component. Alternatively, each of the adjacent components may be connected to each other via pipes, tubing or conduits. Such pipes, tubing or conduits may be made from metal, such as copper, aluminum or stainless steel, and plastic, such as polytetrafluomethylene, polyethylene or polyvinyl chloride. The conduits may be connected to the components via various well-known attachment means, such as threaded fittings, compression fittings, adhesives, etc.

For example, it has been shown that the addition of neat (concentrated) fluid components directly into the supply pump intake greatly reduces the amount of fluid consumed in the system. In tests conducted with the system according to the present invention in a can making process, the inventor has found that the amount of metalworking fluid consumed dropped significantly below that used in the prior art system where bulk additions of fluid were added to the filtration system. Further, it was found that the concentration of metalworking fluid components can be reduced up to 35% below that previously used while maintaining, and in most instances improving, the performance of the fluid, the system and the workpiece. Additionally, the inventor found that the filter, especially when using pleated fibrous filters, had improved and prolonged performance over that in the premixed or bulk supply system. It was believed that the filter lasted longer due to the reduced concentration of components, especially emulsified tramp oil, in the fluid as it was filtered.

Additionally, less fluid components were retained by the filter than in the previous system, which was believed to contribute to the reduction in fluid used and the ability to use lower concentrations of fluid (as less was captured by the filter).

The reduction in fluid concentration within the system also allowed for reduced build-up of residue on the tool and/or workpiece.

A reduction in tramp oil levels in the fluid was also noticed. It is believed that this may in part have been caused by the reduction in fluid concentration necessary within the system and by the improved performance and life of the filter. The reduction in tramp oil reduced build up, increased fluid life, improved filtration life, and improved the product consistency.

Lastly, the system provided an improved workpiece. For example, in a draw and ironing process (two piece can making) it was found that the overall variance in canwall thickness was reduced, that less tears or ruptures occurred and that the workpieces required less cleaning than those made by the previous system.

All of these benefits resulted in a lower cost in running and maintaining the system, in reducing the amount of waste generated (either in filter paper or soiled fluid), in reducing the variation in the end work product (thereby reducing rejections) and in reducing cleaning costs (due to less tramp oil and other soils being retained on the workpieces and tooling).

## Claims

1. A system for managing metalworking fluids, comprising an inlet (11) and an outlet (13) on a metalworking station (12); filtration means (17) having a collection area (18) for spent metalworking fluids from said metalworking station, and a retention area (20) to retain the filtered metalworking fluid, with a filter (19) between said collection area and said retention area; said collection area (18) being connected to said outlet for receiving metalworking fluid recycled from said metalworking station for filtration; a conduit for metalworking fluid from the filtration means (17) to the inlet (11) of the metalworking station; and fluid supply means (23A-23D) connected to a path from the filter (19) to the inlet for replenishing the metalworking fluid flow; characterized in that the fluid supply means (23A-23D) further includes means (24) adding the replenishing flow into said conduit between the outlet (21) of the retention area (20) and the inlet (11) to the metalworking station (12).

2. A system according to claim 1, wherein the metalworking station (12) is a can-making station; and the filtration means is a fibrous filter, a centrifugal filter, a coagulation tank, a settling tank, or any combination thereof.

3. A system according to either one of the preceding claims, wherein the supply means is able to supply metalworking fluids and additives therefor from respective separate reservoirs (23A, 23B, 23C, 23D).

4. A system according to any one of the preceding claims, and including means (14) for collecting metalworking fluid between the outlet (13) and the filtration means (17), and means (15) for pumping the metalworking fluid from the collecting means to the filtration means.

5. A system according to claim 4, wherein said collecting means (14) between the outlet of the metalworking station and the filtration means is a sump (14); and including a pump (15) between said sump and said collection area.

6. A system according to any one of the preceding claims, and including a fluid forwarding pump (25) connected in said conduit between the outlet (21) of said retention area (20) and said inlet (11) for forwarding filtered metalworking fluid to said inlet from the retention area; and wherein said pump (24) of the fluid supply means (23A-23D) is connected to the inlet of said forwarding pump (25) for adding fluid to replenish the pumped flow between the retention area and the inlet.

7. A system according to claim 6, wherein the forwarding pump (25) between the outlet (21) of the retention area (20) and the inlet (11) is a variable pump, optionally either speed-adjustable or volume-variable.

8. A system according to claim 6 or 7, in conjunction with claim 3, wherein said fluid adding means (24) connected between on the one hand said fluid supply means for the metalworking fluid and additives and on the other hand said conduit, is a variable pump (24), preferably speed variable or volume adjustable, and is adapted to operate as a metalworking fluid metering device between the fluid supply means (23A-23D) of metalworking fluid and additives, and said forwarding pump (25).

9. A process of managing metalworking fluids comprising the steps of:
(a) supplying metalworking fluid to a metalworking area (12);
(b) removing used metalworking fluid from the metalworking area;
(c) collecting the used metalworking fluid in a collection area (18);
(d) filtering the used metalworking fluid in a filter (19);
(e) retaining the filtered metalworking fluid in a retention area (20) separated from the collection area (18) by the filter (19);
(f) returning the filtered metalworking fluid to the metalworking area (12); and
(g) making up the volume of fluid in the flow of used metalworking fluid from the filter (19) to the metalworking area;
characterised in that the step of making up the metalworking fluid comprises adding metalworking fluid constituents to the filtered fluid between the outlet of the retention area (20) and the return of metalworking fluid to the metalworking area (12).

## Patentansprüche

1. System zur Behandlung von Metallbearbeitungsflüssigkeiten, das einen Einlaß (11) und einen Auslaß (13) an einem Metallbearbeitungsarbeitsplatz (12), Filtrationseinrichtungen (17) mit einem Sammelbereich (18) für verbrauchte Metallbearbeitungsflüssigkeiten von dem Metallbearbeitungsarbeitsplatz und einem Rückhaltebereich (20), um die filtrierte Metallbearbeitungsflüssigkeit zurückzuhalten, sowie einen Filter (19) zwischen dem Sammelbereich und dem Rückhaltebereich, wobei der Sammelbereich (18) mit dem Auslaß verbunden ist, um zur Filtration von dem Metallbearbeitungsarbeitsplatz zurückgeführte Metallbearbeitungsflüssigkeit aufzunehmen, eine Rohrleitung für Metallbearbeitungsflüssigkeit von der Filtrationseinrichtung (17) zu dem Einlaß (11) des Metallbearbeitungsarbeitsplatzes und Flüssigkeitszufuhreinrichtungen (23A bis 23D) umfaßt, die mit einem Strömungsweg von dem Filter (19) zu dem Einlaß verbunden sind, um den Metallbearbeitungsflüssigkeitstrom zu ergänzen, dadurch gekennzeichnet, daß die Flüssigkeitszufuhreinrichtungen (23A bis 23D) außerdem Einrichtungen (24) umfassen, die den Ergänzungsstrom der Rohrleitung zwischen dem Auslaß (21) des Rückhaltebereiches (20) und dem Einlaß (11) in den Metallbearbeitungsarbeitsplatz (12) zuführen.

2. System nach Anspruch 1, bei dem der Metallbearbeitungsarbeitsplatz (12) ein Dosenfertigungsarbeitsplatz ist und die Filtrationseinrichtung ein Faserfilter, ein Zentrifugalfilter, ein Koaguliertank, ein Absetzbecken oder jede beliebige Kombination daraus ist.

3. System nach einem der vorhergehenden Ansprüche, bei dem die Zufuhreinrichtung in der Lage ist, Metallbearbeitungsflüssigkeiten und Additive für dieselben aus entsprechenden getrennten Vorratsgefäßen (23A, 23B, 23C, 23D) zuzuführen.

4. System nach einem der vorhergehenden Ansprüche, das Einrichtungen (14) zum Sammeln von Metallbearbeitungsflüssigkeit zwischen dem Auslaß (13) und der Filtrationseinrichtung (17) und Einrichtungen (15) zum Pumpen der Metallbearbeitungsflüssigkeit von den Sammeleinrichtungen zu den Filtrationseinrichtungen umfaßt.

5. System nach Anspruch 4, bei dem die Sammeleinrichtung (14) zwischen dem Auslaß des Metallbearbeitungsarbeitsplatzes und der Filtrationseinrichtung ein Auffangbecken (14) ist und eine Pumpe (15) zwischen dem Auffangbecken und dem Sammelbereich einschließt.

6. System nach einem der vorhergehenden Ansprüche, das eine Flüssigkeit fördernde Pumpe (25) einschließt, die in der Rohrleitung zwischen dem Auslaß (21) des Rückhaltebereiches (20) und dem Einlaß (11) angebracht ist, um filtrierte Metallbearbeitungsflüssigkeit von dem Rückhaltebereich zu dem Einlaß zu fördern, wobei die Pumpe (24) der Flüssigkeitszufuhreinrichtungen (23A bis 23D) mit dem Einlaß der fördernden Pumpe (25) verbunden ist, um Flüssigkeit zuzuführen, um den zwischen dem Rückhaltebereich und den Einlaß gepumpten Strom zu ergänzen.

7. System nach Anspruch 6, bei dem die fördernde Pumpe (25) zwischen dem Auslaß (21) des Rückhaltebereiches (20) und dem Einlaß (11) eine Regelpumpe ist, die wahlweise entweder drehzahlregelbar oder volumenregelbar ist.

8. System nach Anspruch 6 oder 7 in Verbindung mit Anspruch 3, bei dem die Flüssigkeit hinzuführende Einrichtung (24), die zwischen den Flüssigkeit zuführenden Einrichtungen für die Metallbearbeitungsflüssigkeit und Additive auf der einen Seite und der Rohrleitung auf der anderen Seite angeordnet ist, eine vorzugsweise drehzahlregelbare oder volumenregelbare Regelpumpe (24) ist und adaptiert ist, um als Metallbearbeitungsflüssigkeitdosiereinrichtung zwischen den Flüssigkeitszufuhreinrichtungen (23A bis 23D) für Metallbearbeitungsflüssigkeit und Additive und der fördernden Pumpe (25) zu arbeiten.

9. Verfahren zur Behandlung von Metallbearbeitungsflüssigkeiten, bei dem
(a) Metallbearbeitungsflüssigkeit einem Metallbearbeitungsbereich (12) zugeführt wird,
(b) gebrauchte Metallbearbeitungsflüssigkeit aus dem Metallbearbeitungsbereich entfernt wird,
(c) gebrauchte Metallbearbeitungsflüssigkeit in dem Sammelbereich (18) gesammelt wird,
(d) die gebrauchte Metallbearbeitungsflüssigkeit mit einem Filter (19) filtriert wird,
(e) die filtrierte Metallbearbeitungsflüssigkeit in einem Rückhaltebereich (20), der durch den Filter (19) von dem Sammelbereich (18) getrennt ist, zurückgehalten wird,
(f) die filtrierte Metallbearbeitungsflüssigkeit in den Metallbearbeitungsbereich (12) zurückgeführt wird, und
(g) das Flüssigkeitsvolumen in dem Strom von gebrauchter Metallbearbeitungsflüssigkeit von dem Filter (19) zu dem Metallbearbeitungsbereich ergänzt wird,
dadurch gekennzeichnet, daß der filtrierten Flüssigkeit in der Ergänzungsstufe der Metallbearbeitungsflüssigkeit zwischen dem Auslaß des Rückhaltebereiches (20) und der Rückkehr der Metallbearbeitungsflüssigkeit in den Metallbearbeitungsbereich (12) Metallbearbeitungsflussigkeitbestandteile zugegeben werden.

## Revendications

1. Système pour le traitement des fluides de travail des métaux comprenant une entrée (11) et une sortie (13) sur une station (12) de travail des métaux ; un moyen de filtration (17) ayant une zone de collection (18) pour les fluides usés de travail des métaux provenant de ladite station de travail des métaux, et une zone de rétention (20) pour retenir le fluide filtré de travail des métaux, avec un filtre (19) entre ladite zone de collection et ladite zone de rétention ; ladite zone de collection (18) étant connectée à ladite sortie pour recevoir le fluide de travail des métaux recyclé de ladite station de travail des métaux pour une filtration ; un conduit pour le fluide de travail des métaux du moyen de filtration (17) à l'entrée (11) de la station de travail des métaux ; et un moyen de fourniture de fluide (23A-D) connecté à un trajet du filtre (19) à l'entrée pour le réapprovisionnement de l'écoulement du fluide de travail des métaux ; caractérisé en ce que le moyen de fourniture de fluide (23A-D) comporte de plus un moyen (24) ajoutant l'écoulement de réapprovisionnement dans ledit conduit entre la sortie (21) de la zone de rétention (20) et l'entrée (11) de la station (12) de travail des métaux.

2. Système selon la revendication 1 où la station (12) de travail des métaux est une station de fabrication de boîtes de conserve ; et le moyen de filtration est un filtre fibreux, un filtre centrifuge, un réservoir de coagulation, un réservoir de décantation ou toute combinaison de ceux-ci.

3. Système selon l'une quelconque des revendications précédentes où le moyen de fourniture peut fournir les fluides de travail des métaux et les additifs pour ceux-ci à partir de réservoirs séparés respectifs (23A, 23B, 23C, 23D).

4. Système selon l'une quelconque des revendications précédentes comprenant un moyen (14) pour collecter le fluide de travail des métaux entre la sortie (13) et le moyen de filtration (17) et un moyen (15) pour pomper le fluide de travail des métaux du moyen de collection au moyen de filtration.

5. Système selon la revendication 4 où ledit moyen de collection(14) entre la sortie de la station de travail des métaux et le moyen de filtration est une fosse (14) ; et comprenant une pompe (15) entre ladite fosse et ladite zone de collection.

6. Système selon l'une quelconque des revendications précédentes et comprenant une pompe (25) d'envoi du fluide connectée dans ledit conduit entre la sortie (21) de ladite zone de rétention (20) et ladite entrée (11) pour envoyer le fluide filtré de travail des métaux à ladite entrée, à partir de la zone de rétention ; et où ladite pompe (24) du moyen de fourniture du fluide (23A-23D) est connectée à l'entrée de ladite pompe d'envoi (25) pour ajouter du fluide afin de réapprovisionner l'écoulement pompé entre la zone de rétention et l'entrée.

7. Système selon la revendication 6 où la pompe d'envoi (25) entre la sortie (21) de la zone de rétention (20) et l'entrée (11) est une pompe variable, facultativement soit réglable en vitesse ou réglable en volume.

8. Système selon la revendication 6 ou 7, en conjonction avec la revendication 3, où ledit moyen d'addition du fluide (24) connecté entre, d'une part, ledit moyen de fourniture de fluide pour le fluide de travail des métaux et les additifs et, d'autre part, ledit conduit, est une pompe variable (24), de préférence variable en vitesse ou dont le volume est ajustable et elle est adaptée à fonctionner en tant que dispositif de dosage du fluide de travail des métaux entre le moyen de fourniture de fluide (23A-23D) du fluide de travail des métaux et des additifs et ladite pompe d'envoi (25).

9. Procédé de traitement de fluides de travail des métaux comprenant les étapes de :
(a) fournir du fluide de travail des métaux à une zone (12) de travail des métaux ;
(b) retirer le fluide usé de travail des métaux de la zone de travail des métaux ;
(c) collecter le fluide usé de travail des métaux dans une zone de collection (18) ;
(d) filtrer le fluide usé de travail des métaux dans un filtre (19) ;
(e) retenir le fluide filtré de travail des métaux dans une zone de rétention (20) séparée de la zone de collection (18) par le filtre (19) ;
(f) retourner le fluide filtré de travail des métaux à la zone (12) de travail des métaux ; et
(g) compenser le volume du fluide dans l'écoulement du fluide usé de travail des métaux du filtre (19) à la zone de travail des métaux ;
caractérisé en ce que l'étape de compenser le fluide de travail des métaux consiste à ajouter les constituants du fluide de travail des métaux au fluide filtré entre la sortie de la zone de rétention (20) et le retour du fluide de travail des métaux à la zone (12) de travail des métaux.
